# FASCICULE DE BREVET EUROPEEN

(11) **EP 1 718 863 B1**
(45) Date de publication et mention de la délivrance du brevet: **20.07.2011**
(21) Numéro de dépôt: 05726345.1
(22) Date de dépôt: 04.02.2005
(51) Int. Cl.: F03B 17/06

(54) **TURBOMACHINE HYDRAULIQUE**
HYDRAULISCHE TURBOMASCHINE
HYDRAULIC TURBOMACHINE

(30) Priorité: 04.02.2004 FR 0450209
(43) Date de publication de la demande: 08.11.2006
(73) Titulaire: Institut Polytechnique de Grenoble, 38031 Grenoble Cedex (FR); ELECTRICITE DE FRANCE, 75382 Paris Cedex 08 (FR)
(72) Inventeur: ACHARD, Jean-Luc, F-38100 Grenoble (FR); MAITRE, Thierry, F-38330 Saint Ismier (FR)
(74) Mandataire: de Beaumont, Michel
(86) Numéro de dépôt international: PCT/FR2005/050070
(87) Numéro de publication internationale: WO 2005/075819

(56) Documents cités:
- EP-A- 1 365 106
- WO-A-02/44558
- DE-A- 10 065 548
- DE-A1- 3 425 313
- FR-A- 2 821 647
- US-A- 3 918 839
- US-A- 4 084 102
- US-A- 4 264 279
- US-A- 5 269 647
- US-A1- 2001 000 197

## Description

La présente invention concerne une turbomachine hydraulique, et en particulier, une turbomachine hydraulique pour la fourniture d'électricité par récupération de l'énergie de courants marins ou fluviaux.

Parmi les sources d'énergie naturelles non polluantes, une source d'énergie actuellement peu exploitée correspond aux courants d'eau naturellement présents sur la planète : courants de pleine mer, courants de marée, courants de détroit et d'estuaire, courants de fleuve ou de rivière. En effet, si les installations hydroélectriques fournissant de l'énergie électrique à partir de l'énergie potentielle contenue dans une retenue d'eau (par exemple des barrages sur des fleuves ou des rivières) sont largement répandues, les dispositifs fournissant de l'énergie électrique directement à partir de l'énergie cinétique de courants marins ou fluviaux sont généralement encore actuellement au stade de projets.

Même si les sites qui pourraient être utilisés pour la fourniture d'énergie électrique à partir de courants marins ou fluviaux correspondent généralement à des courants à faibles vitesses, de 0,5 m/s à 6 m/s, la taille des sites et le grand nombre de sites potentiels rendent une telle source d'énergie particulièrement intéressante. En effet, de la rivière jusqu'au grand courant océanique, les surfaces exploitables traversées par un courant varient typiquement de 100 m² à 100 km², ce qui correspond, pour une vitesse de 2 m/s, à des puissances théoriquement récupérables respectivement de 400 kilowatts à 400 gigawatts.

La publication "Helical Turbines for the Gulf Stream: Conceptual Approach to Design of a Large-Scale Floating Power Farm" de Gorlov (Marine Technology, vol. 35, n° 3, Juillet 1998, pages 175-182) décrit un dispositif de fourniture d'électricité comprenant un groupe de colonnes disposées dans un courant marin et reliées les unes aux autres par un système de barres de renforcement. Chaque colonne se compose d'un empilement de turbines élémentaires, appelées par la suite module turbine, selon un axe déterminé. Un module turbine se compose de deux flasques parallèles entre lesquelles sont disposées au moins deux pales correspondant chacune à une portion d'hélicoïde, les extrémités des pales étant reliées à l'une des flasques. Dans la colonne, les flasques de deux modules turbine adjacents sont solidaires. Lorsqu'il est traversé par un courant, chaque module turbine fournit un couple d'entraînement à la colonne qui, à son tour, entraîne un générateur électrique.

Une telle structure présente plusieurs inconvénients. Dans un module turbine, le couple d'entraînement est fourni par la liaison entre les pales et les flasques associées, et, dans une colonne, le couple d'entraînement du générateur électrique est transmis de proche en proche entre chaque module turbine par les liaisons entre les flasques de modules turbine adjacents. De ce fait, une rupture d'une pale d'un seul module turbine peut entraîner la mise hors d'usage de la colonne turbine. En outre, les pales d'un module turbine reçoivent un couple de torsion transmis par les modules turbine sous-jacents de la colonne. Les pales des modules turbine proches du générateur électrique sont donc les plus sollicitées. Pour éviter la rupture des pales les plus sollicitées, on peut prévoir des modules turbine plus ou moins résistants selon leur position dans la colonne par rapport au générateur électrique. Toutefois, ceci complique la conception et la fabrication de la colonne. Si l'on souhaite conserver des modules turbine identiques, il est nécessaire que chaque module turbine puisse résister au couple de torsion maximum, ce qui en pratique consiste à prévoir des pales suffisamment épaisses. Dans ce cas, les modules turbine éloignés du générateur sont surdimensionnés en épaisseur par rapport au couple de torsion qu'ils reçoivent réellement, ce qui dégrade les performances hydrodynamiques de la colonne.

En outre, le groupe de colonnes décrit dans la publication de Gorlov est complètement immergé et ancré au fond marin. Les opérations de maintenance du groupe de colonnes doivent donc être réalisées par des plongeurs. Il en est de même des opérations de modifications d'un groupe de colonnes déjà installé correspondant, par exemple, au retrait ou à l'ajout de colonnes. Il s'agit donc d'opérations relativement coûteuses, techniquement difficiles et entraînant une prise de risque importante pour les plongeurs du fait du courant marin présent au niveau des colonnes.

Voir aussi WO-A-02/44558.

La présente invention vise une turbomachine hydraulique, notamment pour la fourniture d'électricité, comportant au moins une colonne immergée dans un courant marin ou fluvial et composée d'un empilement de modules turbine dans lequel les pales d'un module turbine ne reçoivent pas de couple de torsion des modules turbine adjacents.

Par ailleurs, la présente invention vise un dispositif hydraulique comportant un ensemble de colonnes reliées les unes aux autres dans lequel le montage et la maintenance des colonnes sont simplifiés et peuvent être réalisés, au moins en partie, hors de l'eau.

Pour atteindre ces objets, la présente invention prévoit une turbomachine hydraulique selon la revendication 1.

Selon un mode de réalisation de l'invention, chaque bras est adapté à fournir une force orientée selon l'axe de l'arbre d'entraînement lorsqu'il est immergé dans le liquide en mouvement.

Selon un mode de réalisation de l'invention, la turbomachine comprend des ailettes d'extrémité au niveau des bords marginaux de chaque pale motrice.

Selon un mode de réalisation de l'invention, chaque pale motrice a un profil d'aile dont le squelette correspond à un arc d'un cercle dont le centre appartient à l'axe de l'arbre d'entraînement.

Selon un mode de réalisation de l'invention, le bras s'étend selon une direction sensiblement perpendiculaire à l'axe de l'arbre d'entraînement et a une section transverse en forme de profil d'aile.

La présente invention prévoit également un dispositif comprenant plusieurs turbomachines telles que définies précédemment, et comprenant une barge comportant, pour chaque turbomachine, une ouverture dans laquelle une portion d'extrémité de l'arbre d'entraînement de la turbomachine, s'étendant hors du liquide en mouvement, est montée libre en rotation et en coulissement axial.

Selon un mode de réalisation de l'invention, les extrémités des arbres d'entraînement des turbomachines opposées aux portions d'extrémités sont lestées ou destinées à être reliées à une surface fixe par rapport au liquide en mouvement.

La présente invention prévoit également un système comprenant un ensemble de dispositifs tels que définis précédemment, dans lequel au moins certains des dispositifs sont reliés entre eux par des premiers câbles et dans lequel au moins certains des dispositifs sont destinés à être reliés par des seconds câbles à une surface fixe par rapport au liquide en mouvement.

Selon un mode de réalisation de l'invention, certains des dispositifs de l'ensemble de dispositifs sont répartis le long d'une surface plane en gouttière destinée à être disposée transversalement à la direction du liquide en mouvement.

Ces objets, caractéristiques et avantages, ainsi que d'autres de la présente invention seront exposés en détail dans la description suivante d'exemples de réalisation particuliers faite à titre non-limitatif en relation avec les figures jointes parmi lesquelles :
les figures 1A, 1B jusqu'à 4A, 4B représentent respectivement une vue de dessus et une vue en perspective de quatre exemples de réalisation d'un module turbine selon l'invention ;
les figures 5A à 5C représentent partiellement respectivement trois exemples de réalisation d'une colonne de modules turbine selon l'invention ;
les figures 6 et 7 représentent schématiquement une variante de réalisation de l'invention, respectivement à deux étapes de fonctionnement ;
la figure 8 représente un exemple de réalisation plus détaillé d'une colonne de modules turbine selon l'invention ;
les figures 9A à 9C représentent trois exemples de fixation de premières extrémités de colonnes de modules turbine selon l'invention ;
la figure 10 représente un exemple de fixation de secondes extrémités de colonnes de modules turbine selon l'invention ;
les figures 11A et 11B représentent deux exemples de réalisation d'une barge de fixation selon l'invention de colonnes de modules turbine ;
les figures 12A à 12K représentent onze exemples d'agencement de colonnes de modules turbine reliées à une barge de fixation ; et
les figures 13A à 13C représentent trois exemples d'agencement de barges selon l'invention.

Dans le reste de la description, on appelle colonne turbine une colonne de modules turbine, c'est-à-dire un empilement de modules turbine selon l'invention.

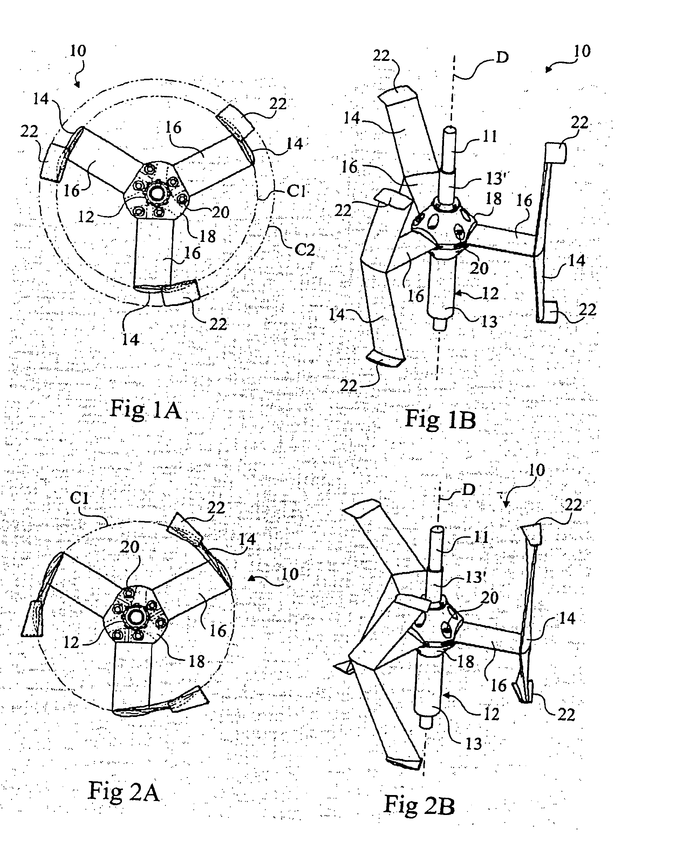

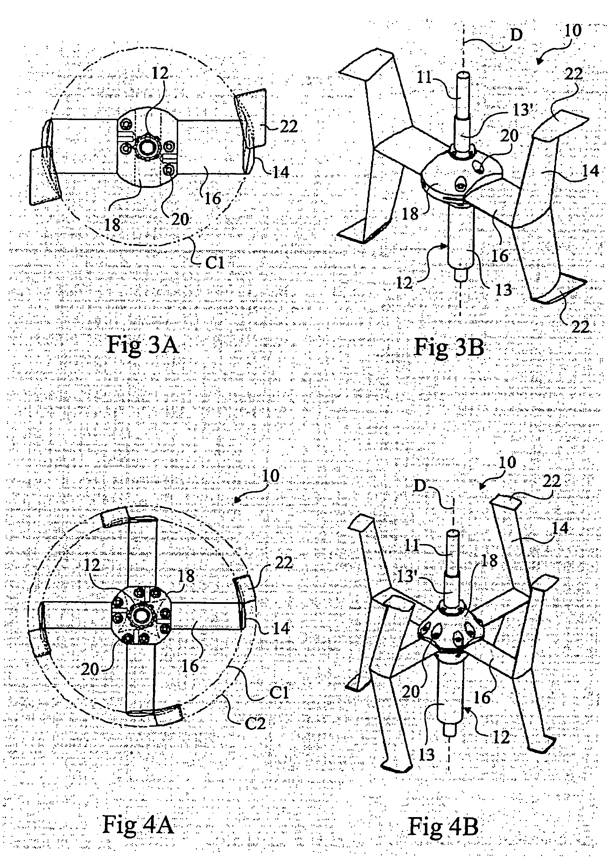

Les figures 1A, 1B à 4A, 4B illustrent quatre exemples de réalisation d'un module turbine selon l'invention à partir duquel est réalisé la colonne turbine. Pour chaque exemple de réalisation, le module turbine 10 comprend une portion de câble de tension 11 d'axe D qui coulisse dans une portion d'arbre d'entraînement 12 d'axe D adaptée à être entraînée en rotation autour de l'axe D par l'intermédiaire de pales motrices 14 réparties autour de la portion d'arbre d'entraînement 12. La portion d'entraînement 12 comprend une portion tubulaire de grand diamètre 13 et une portion tubulaire de petit diamètre 13'. Chaque pale motrice 14 est reliée à la portion d'arbre d'entraînement 12 par l'intermédiaire d'un bras rigide 16 sensiblement perpendiculaire à l'axe D et fixé à un moyeu 18 solidaire de la portion d'arbre d'entraînement 12. Pour les quatre exemples de réalisation, chaque pale motrice 14 a une forme générale d'aile volante en "V" orientée de façon que l'envergure de l'aile, par exemple d'environ 1 mètre, se mesure selon l'axe D et ayant une section, selon un plan perpendiculaire à l'axe D, en forme de profil d'aile dont le squelette correspond à une portion d'un cercle C1, par exemple de 1 mètre de diamètre, dont le centre est sur l'axe D. A titre d'exemple, le profil d'une pale motrice est un profil d'aile de la famille Naca ou Eppler. Chaque pale motrice 14 est reliée au niveau de sa portion centrale au bras rigide 16 associé. La fixation des bras rigides 16 au moyeu 18 est assurée par l'intermédiaire de vis 20. Une ailette d'extrémité 22 (winglet) est prévue au niveau des bords marginaux de chaque pale motrice 14 pour limiter les pertes de performances hydrodynamiques dues aux effets de bords. Les ailettes d'extrémité sont globalement orientées selon un plan moyen perpendiculaire à l'axe D ou peuvent avoir un faible angle de calage par rapport à un tel plan moyen. Les courants dans lesquels le module turbine est destiné à fonctionner sont généralement inférieurs à une dizaine de mètres par seconde. Les vitesses de rotation du module turbine sont donc relativement faibles (typiquement inférieures à 300 tours par minute pour un module turbine 10 dans lequel les pales motrices 14 sont situées à environ 1 mètre de la portion d'arbre d'entraînement 12). Ceci permet d'utiliser avantageusement des pales motrices 14 en forme d'aile volante en "V" qui ne pourraient être utilisées à des vitesses de rotation élevées en raison des forces centrifuges. Les pales motrices 14 sont en forme d'aile symétriques ou légèrement dissymétriques, ce qui permet de limiter, en fonctionnement, le développement d'un couple de torsion au niveau du bras 16 reliant la pale motrice 14 à la portion d'arbre d'entraînement 12.

Lorsque le module turbine 10 est placé dans un courant ayant une direction perpendiculaire à l'axe D, les pales motrices 14 entraînent l'arbre 12 en rotation autour de l'axe D. Dans la suite de la description, on considérera sans indication contraire que le courant marin ou fluvial a une direction sensiblement perpendiculaire à l'axe D. Toutefois, il est clair que lorsque le courant a une direction inclinée par rapport à l'axe D de moins de 90 degrés, les pales motrices 14 entraînent toujours la portion d'arbre d'entraînement 12 en rotation mais avec un rendement qui décroît lorsque l'inclinaison décroît.

Dans le premier exemple de réalisation représenté aux figures 1A, 1B, le module turbine 10 comprend trois pales motrices 14 correspondant chacune à une aile en "V" ayant une flèche d'environ 15° et un profil dont la corde est sensiblement constante pour toute l'envergure de l'aile. Les ailettes d'extrémité 22 sont uniquement orientées vers l'extérieur du module turbine 10 et le bord marginal le plus externe de l'ailette d'extrémité 22 est incurvé selon un cercle C2 d'axe D. Dans le second exemple de réalisation représenté aux figures 2A, 2B, le module turbine 10 comprend trois pales motrices 14 correspondant chacune à une aile en "V" ayant une flèche d'environ 30° et un profil dont la corde est sensiblement constante pour toute l'envergure de l'aile. Pour chaque pale motrice 14, chaque ailette d'extrémité 22 correspond à une aile Delta non symétrique. Dans le troisième exemple de réalisation représenté aux figures 3A, 3B, le module turbine 10 comprend deux pales motrices 14 correspondant chacune à une aile en "V" ayant une flèche d'environ de 15° et un profil dont la corde diminue depuis la portion centrale de l'aile jusqu'aux bords marginaux de l'aile. Chaque ailette d'extrémité 22 correspond à une aile Delta non symétrique. Dans le quatrième exemple de réalisation représenté aux figures 4A, 4B, le module turbine 10 comprend quatre pales motrices 14 correspondant chacune à une aile en "V" ayant une flèche d'environ 15° et un profil dont la corde est sensiblement constante pour toute l'envergure de l'aile. Les ailettes d'extrémité 22 sont uniquement orientées vers l'extérieur du module turbine 10 et le bord marginal le plus externe de l'ailette d'extrémité 22 est incurvé selon un cercle C2 d'axe D.

Selon une variante des premier et quatrième exemples de réalisation, les ailettes d'extrémité 22 s'étendent de part et d'autre des bords marginaux de chaque pale motrice en ayant des bords marginaux incurvés selon des cercles concentriques. Les ailettes d'extrémité 22 peuvent être également des ailes Delta symétriques. En outre, dans les exemples de réalisation précédemment décrits, le squelette du profil associé à chaque pale motrice 14 correspond à une portion de cercle. Toutefois, des pales motrices à profil symétrique peuvent être utilisées.

Pour un courant constant et pour une vitesse de rotation donnée, le couple d'entraînement fourni par les pales motrices 14 d'un module turbine 10 dépend principalement de la surface alaire d'une pale motrice 14 et du nombre de pales motrices 14. De ce fait, pour obtenir un même couple d'entraînement que le premier exemple de réalisation, les pales motrices 14 du troisième exemple de réalisation doivent avoir une épaisseur et une corde plus importantes que les pales motrices 14 représentées dans les deux premiers exemples de réalisation. De telles pales motrices 14 sont donc mécaniquement plus résistantes et sont bien adaptées à des courants forts, par exemple de l'ordre de 6 m/s. Inversement, les pales motrices 14 du quatrième exemple de réalisation ont une épaisseur et une corde réduites par rapport aux autres exemples de réalisation. Ceci permet de réduire le nombre de Reynolds associé à l'écoulement autour de chaque pale motrice 14 et donc de favoriser la formation d'un écoulement laminaire pour améliorer les performances du module turbine. Une telle configuration est donc bien adaptée aux courants faibles.

Dans les exemples de réalisation précédemment décrits, chaque bras 16 s'étend sensiblement selon une direction perpendiculaire à l'axe D et a une section transverse correspondant à un profil d'aile. Les caractéristiques du profil et l'angle de calage du bras 16 par rapport à la portion d'arbre d'entraînement 12 sont déterminés de façon qu'en présence d'un courant selon une direction perpendiculaire à l'axe D, les bras 16 d'un module turbine 10 fournissent une force résultante orientée selon l'axe D.

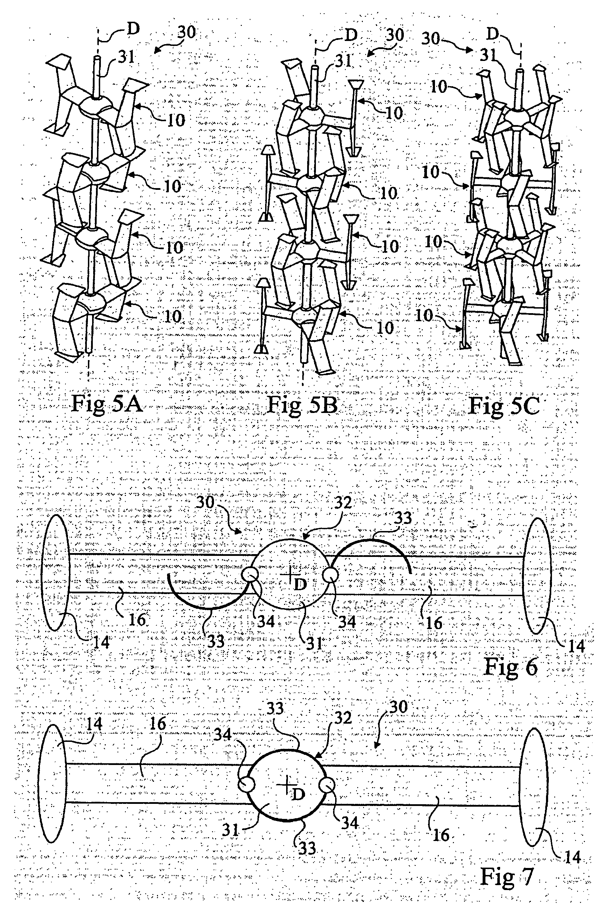

Les figures 5A à 5C représentent schématiquement trois exemples de réalisation partiels de colonnes turbine 30 selon l'invention constituées d'un empilement de modules turbine respectivement à deux, trois et quatre pales motrices 14 (c'est-à-dire respectivement les troisième, premier et quatrième exemples de réalisation). Sur les figures 5A à 5C, seuls trois modules turbine 10 par colonne turbine 30 sont représentés. L'arbre d'entraînement 31 de la colonne turbine 30 est formé par l'ensemble des portions d'arbre d'entraînement 12 des modules turbine 10 qui sont rendus solidaires par coopération des portions tubulaires de grand et petit diamètres 13, 13' d'un module turbine 10 avec les portions tubulaires de petit et grand diamètres des modules turbine adjacents. Un câble de tension (non représenté), constitué des portions de câble de tension 11 des modules turbine, traverse l'arbre d'entraînement 31. Seul l'arbre d'entraînement 31 assure la transmission d'un couple d'entraînement et est entraîné en rotation par les pales 14 des modules turbine 10. L'axe de tension assure seulement la mise en tension de la colonne turbine 30 et n'est pas entraîné en rotation. La colonne turbine 30 entraîne un générateur électrique (non représenté) au niveau de l'une des extrémités de l'arbre d'entraînement 31. Les pales motrices 14 d'un module turbine 10 sont seulement reliées à la portion d'arbre d'entraînement 12 et ne sont pas directement reliées à leurs extrémités aux pales motrices 14 des modules turbine 10 adjacents. Le couple d'entraînement fourni par l'arbre d'entraînement 31 est donc transmis seulement par les portions d'arbre d'entraînement 12 et les pales motrices 14 ne reçoivent pas de couples de torsion indésirables des modules turbine 10 adjacents.

Selon une variante de l'invention, l'arbre d'entraînement 31 n'est pas traversé par un câble de tension. L'arbre d'entraînement 31 peut alors correspondre à un câble unique ou à un arbre cylindrique plein ou creux auquel sont directement reliées les pales 14 de chaque module turbine 10 .

Dans une colonne turbine 30, un module turbine 10 peut être décalé angulairement autour de l'axe D par rapport à un module turbine adjacent. Ceci permet d'obtenir un couple d'entraînement, au niveau de l'extrémité de l'arbre d'entraînement 12 de la colonne turbine 30 reliée au générateur électrique, qui est sensiblement constant tout au long d'une rotation de 360° de la colonne turbine 30. Ce décalage est, par exemple, de 360/(P*N) degrés pour une colonne turbine 30 ayant un empilement de N modules turbine 10, chaque module turbine 10 ayant P pales motrices 14. En outre, de tels décalages permettent d'obtenir une structure dissymétrique qui facilite la mise en rotation de la colonne turbine 30 à partir d'une position d'arrêt.

En fonctionnement, il peut résulter de l'écoulement liquide autour d'un module turbine 10 une force de traînée perpendiculaire à l'axe D et dont la direction exacte dépend du sens de rotation du module turbine 10. L'arbre d'entraînement 31 peut donc subir une force globale de traînée non nulle, correspondant à la somme des forces de traînée associées à chaque module turbine 10. Ceci peut ne pas être souhaitable pour certaines applications. Pour pallier un tel inconvénient, selon une variante de l'invention, certains modules turbine 10 sont reliés à l'arbre d'entraînement 31 chacun par l'intermédiaire d'un système d'inversion de couple permettant au module turbine 10 de tourner autour de l'axe D selon le sens opposé au sens de rotation de l'arbre d'entraînement 31. Les modules turbine 10 peuvent être répartis sur la colonne turbine 30 de façon que deux modules turbine 10 adjacents tournent dans un sens opposé. Plus généralement, la colonne turbine 30 peut être constituée d'une succession de groupes de modules turbine 10 adjacents comportant chacun un nombre réduit de modules turbine 10 adjacents. Tous les modules turbine 10 d'un même groupe tournent alors dans le même sens et les modules turbine 10 de deux groupes successifs tournent dans des sens opposés. Les structures précédemment décrites sont avantageuses dans la mesure où la force de traînée totale appliquée à la colonne turbine 30, correspondant à la somme des forces de traînée associées à chaque module turbine 10, peut alors être sensiblement réduite voire annulée.

Selon le type de pales motrices choisies pour les modules turbine et l'agencement des modules turbine, la colonne turbine 30 peut se mettre automatiquement en rotation depuis la position d'arrêt lorsqu'elle est traversée par un courant marin ou fluvial. Toutefois, il peut être nécessaire de prévoir un système supplémentaire dédié à la mise en rotation de la colonne turbine 30.

Les figures 6 et 7 représentent des vues selon l'axe D, respectivement lors de la mise en rotation d'une colonne turbine depuis la position d'arrêt et lors d'un régime de rotation stabilisé, d'une variante de réalisation d'une colonne turbine 30 comprenant un système dédié à la mise en rotation de la colonne turbine. Le système de mise en rotation correspond à un rotor de Savonius 32 qui est empilé selon l'axe D entre deux modules turbine ou à l'une des extrémités de la colonne turbine 30 (un module turbine adjacent au rotor de Savonius 32 étant représenté à titre d'exemple aux figures 6 et 7). Plusieurs rotors de Savonius peuvent être répartis sur une colonne turbine. Le rotor de Savonius 32 comprend deux pales 33, chacune en forme de demi-cylindre, reliées à l'arbre d'entraînement 31. Un système 34 de déploiement et de rabattement permet de faire pivoter les pales 33 du rotor de Savonius 32 entre une position déployée et une position rabattue.

Comme cela est représenté en figure 6, lorsque la colonne turbine 30 est à l'arrêt, les pales 33 du rotor de Savonius 32 sont déployées et entraînent en rotation l'arbre d'entraînement 31 de la colonne turbine 30 dès qu'un courant de direction perpendiculaire à l'axe D atteint la colonne turbine 30. Au fur et à mesure que la vitesse de rotation de la colonne turbine 30 augmente, les pales 33 du rotor de Savonius 32 sont rabattues sur l'arbre d'entraînement 31 de façon que, en régime établi, elles ne participent plus à l'entraînement, de l'arbre d'entraînement 31, ce qui est souhaitable puisque le rendement d'un rotor de Savonius 32 tend à se dégrader aux vitesses de rotation élevées.

Comme cela a été décrit précédemment, pour chaque module turbine 10, les bras 16 reliant les pales motrices 14 à la portion d'arbre d'entraînement 12 peuvent être définis pour fournir une force résultante parallèle à l'axe D. Lorsque la colonne turbine 30 est placée dans courant marin ou fluvial de direction perpendiculaire à l'axe D, chaque module turbine 10 exerce donc, en plus d'un couple d'entraînement, une force selon l'axe D orientée vers l'une des extrémités de la colonne turbine 30. Lorsque la colonne turbine 30 est mise en rotation, les forces axiales qui se développent donc le long de l'arbre d'entraînement 31 peuvent assurer la réalisation de plusieurs fonctions qui seront détaillées par la suite.

On peut ainsi prévoir, dans le cas où la colonne turbine 30 comprend un ou plusieurs rotors de Savonius, que le système de déploiement et de rabattement des pales du rotor de Savonius soit actionné automatiquement par les forces axiales fournies par les modules turbine. Plus précisément, lors de la mise en rotation de la colonne turbine, lorsque la vitesse de rotation de la colonne turbine dépasse un seuil déterminé, les forces axiales issues des modules turbines sont suffisantes pour entraîner le rabattement des pales du rotor de Savonius sur l'arbre d'entraînement de la colonne turbine. Inversement, lors de l'arrêt de la colonne turbine, par exemple pour des raisons de maintenance ou en l'absence de courant, lorsque la vitesse de rotation de la colonne turbine diminue en dessous d'un seuil, les forces axiales fournies par les modules turbine diminuent suffisamment pour permettre le déploiement automatique des pales du rotor de Savonius.

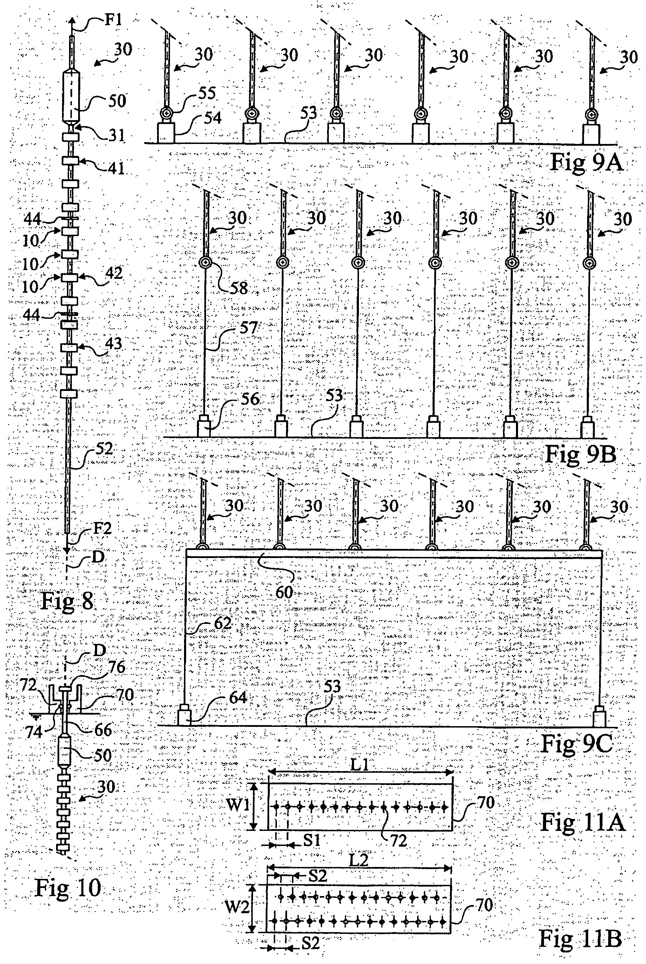

La figure 8 représente de façon plus détaillée une colonne turbine 30 selon l'invention placée dans un courant marin ou fluvial, l'axe D étant sensiblement orienté selon la verticale. La colonne turbine 30 se compose de plusieurs tronçons de colonne turbine reliés par des brides 44 (trois tronçons 41, 42, 43 étant représentés en figure 8). Chaque tronçon 41, 42, 43 comprend un empilement de modules turbine 10. Un tronçon de colonne turbine peut être aisément ajouté à la colonne turbine ou retiré de la colonne turbine. Ceci facilite la maintenance de la colonne turbine 30 et permet de modifier la longueur de la colonne turbine en fonction de la profondeur exploitable du site sur lequel la colonne turbine 30 est installée. Les portions d'arbre d'entraînement 12 de chaque module turbine 10 peuvent être pleines (ou encore remplies d'eau) ou creuses (tubulaires) suivant la plus ou moins grande profondeur du tronçon considéré, les tronçons les plus profonds étant les plus lourds pour assurer la stabilité de la colonne turbine 30.

Chaque colonne turbine 30 est maintenue en tension par deux forces axiales F1, F2 de sens opposé appliquées aux extrémités de la colonne turbine 30 pour augmenter la rigidité de la colonne turbine 30 et limiter les mouvements de flexion dans une plage admissible qui dépend notamment de la résistance mécanique souhaitée de la colonne turbine et de la proximité des colonnes turbine 30 voisines. La force axiale F1 d'extrémité haute de la colonne turbine 30, peut être fournie par au moins un flotteur 50, exerçant une traction sur la colonne turbine 30 vers le haut. Comme cela sera décrit plus en détail par la suite, l'extrémité haute de la colonne turbine peut être reliée à une barge. Dans le cas où l'arbre d'entraînement est un câble, la force F1 peut être fournie par un système de mise en tension actionné à partir de la barge. Dans le cas de sites à grand fond, l'extrémité inférieure de la colonne turbine 30 peut être laissée libre. On peut alors prévoir au moins un lest 52 exerçant une traction sur la colonne turbine 30 vers le bas. Dans le cas de fleuves ou de sites côtiers à faible fond, on peut prévoir de relier l'extrémité inférieure de la colonne turbine 30 au fond du fleuve ou du site côtier pour exercer une traction sur la colonne turbine 30 vers le bas. Dans ce dernier cas, il peut être avantageux de séparer la fonction de transmission de couple qui s'exercerait sur un arbre creux de la fonction de rigidification qui serait assurée par la mise sous tension d'un câble placé au sein de l'arbre creux. Ce câble ancré, extrémité basse, sur le fond pourrait être prétendu, extrémité haute, à partir d'un système d'enroulement-déroulement placé sur la barge qui assurerait une tension constante quels que soient les oscillations verticales de la barge.

Les forces axiales d'extrémités F1 et F2 peuvent être en partie fournies par les modules turbine. En effet, comme cela a été décrit précédemment, les bras 16 reliant pour chaque module turbine les pales motrices 14 à la portion d'arbre d'entraînement 12 peuvent fournir une force axiale résultante orientée vers le haut ou vers le bas selon la configuration choisie des bras 16. En répartissant le long de la colonne turbine 30 des modules turbine 10, on obtient donc une colonne 30 partiellement autorigidifiante sans recourir à des éléments extérieurs de rigidification.

La figure 9A représente un exemple d'ancrage de plusieurs colonnes turbine 30 dans lequel chaque colonne turbine 30 est ancrée séparément au fond 53 du fleuve ou du site côtier par l'intermédiaire d'un plot d'ancrage 54 relié directement au dernier tronçon de la colonne turbine 30 par l'intermédiaire d'une liaison pivotante 55.

La figure 9B représente un autre exemple d'ancrage de plusieurs colonnes turbine 30 dans lequel chaque colonne turbine est ancrée séparément au fond 53 du fleuve ou du site côtier par l'intermédiaire d'un plot d'ancrage 56 relié au dernier tronçon de la colonne turbine par l'intermédiaire d'un câble 57 et, éventuellement, d'une liaison pivotante 58.

La figure 9C représente un autre exemple d'ancrage de plusieurs colonnes turbine 30 dans lequel un faux plancher 60 relie les extrémités des colonnes turbine 30, le faux plancher 60 étant ancré au fond 53 du fleuve ou du site côtier par l'intermédiaire de câbles 62 reliés à des plots d'ancrage 64. Pour certaines installations au niveau de fleuves ou à proximité des côtes, l'ancrage peut se faire aussi sur les berges. Un tel exemple de réalisation permet de diminuer le nombre d'ancrage et donc le coût d'installation d'un ensemble de colonnes turbine 30.

Dans le cas où plusieurs colonnes turbine sont placées de façon relativement proches les unes des autres, chaque colonne turbine comprend avantageusement des protections, par exemple entre chaque tronçon, pour parer les collisions accidentelles entre colonnes turbine en fonctionnement et lors de la montée et de la descente d'une colonne turbine pour des opérations de maintenance.

La figure 10 représente plus en détail la partie supérieure d'une colonne turbine 30 selon l'invention. La colonne turbine 30 comprend une portion cylindrique d'extrémité supérieure 66 maintenue par une barge 70. La barge 70 comprend une ouverture 72 dans laquelle coulisse la portion cylindrique d'extrémité supérieure 66, la portion cylindrique 66 étant libre de tourner autour de l'axe D dans l'ouverture 72. La barge 60 comprend des éléments de guidage 74 facilitant le déplacement de la portion cylindrique 66 dans l'ouverture 72 selon l'axe D. L'extrémité de la portion cylindrique 66 est munie d'une butée 76 empêchant le retrait de la portion cylindrique 66 de l'ouverture 72. La portion cylindrique 66 se projette suffisamment en saillie par rapport à la barge 70 pour permettre, en fonctionnement, des oscillations verticales de la barge 70 dues, par exemple, à la houle. Dans le cas où l'extrémité basse de la colonne turbine 30 est libre et lestée, la colonne turbine 30 peut être treuillée sur la barge 70 par tronçons successifs. Si l'arbre d'entraînement est constitué d'un seul câble, cette opération de treuillage est également possible par un système de double prise du câble sur la barge 70. Dans le cas où l'extrémité basse de la colonne turbine 30 est ancrée et que la colonne turbine 30 comprend un arbre d'entraînement 31 traversé par un câble de tension (pour séparer la fonction de transmission de couple de la fonction de rigidification), la solution évoquée ci-dessus permet également de treuiller un à un les différents modules turbine 10 de la colonne turbine 30, tout en laissant en place le câble de tension ancré et tendu. Pour dégager les modules turbine 10, la portion d'entraînement 12 de chaque module turbine 10 peut être conçue en deux coquilles démontables. De ce fait, et dans tous les cas envisageables, la maintenance (nettoyage, remplacement de pales motrices, de bras ou d'ailettes d'extrémité) est peu coûteuse et s'effectue en toute sécurité à partir de la barge 70.

Le générateur électrique (non représenté) entraîné par la portion cylindrique d'extrémité supérieure 66 de la colonne turbine 30 est avantageusement monté sur la barge 70. Des barges 70 distinctes peuvent être prévues au niveau de chaque colonne turbine 30. Toutefois, il peut être souhaitable que les portions cylindriques d'extrémité supérieure 60 d'un groupe de colonnes turbine adjacentes soient maintenues par une barge 70 unique. Un même générateur électrique peut être entraîné par plusieurs colonnes turbine 30. On peut alors prévoir, sur la barge 70, un système transmettant les couples d'entraînement fournis par les colonnes turbine 30 au générateur électrique.

Les figures 11A et 11B représentent schématiquement des vues de dessus de deux exemples de réalisation de barges 70. A titre d'exemple, la barge 70 représentée en figure 11A est destinée à maintenir une quinzaine de colonnes turbine 30, a une longueur L1 d'environ 80 mètres, et une largeur W1 d'environ 20 mètres. Les ouvertures 72 recevant les portions cylindriques d'extrémité supérieure 66 des colonnes turbine 30 sont alignées selon une seule rangée qui s'étend selon une direction sensiblement perpendiculaire à la direction du courant prévue. Sur la rangée, les ouvertures sont espacées par exemple d'un pas S1 d'environ 5 mètres. A titre d'exemple, en figure 11B, la barge 70 est destinée à maintenir une trentaine de colonnes turbine, a une longueur L2 d'environ 80 m et une largeur W2 d'environ 20 mètres. Les ouvertures 72 sont alignées sur deux rangées parallèles s'étendant selon une direction sensiblement perpendiculaire à la direction du courant prévue. Les ouvertures 72 sont espacées d'un pas S2 d'environ 5 mètres sur chaque rangée, les deux rangées étant décalées l'une par rapport à l'autre d'un demi-pas.

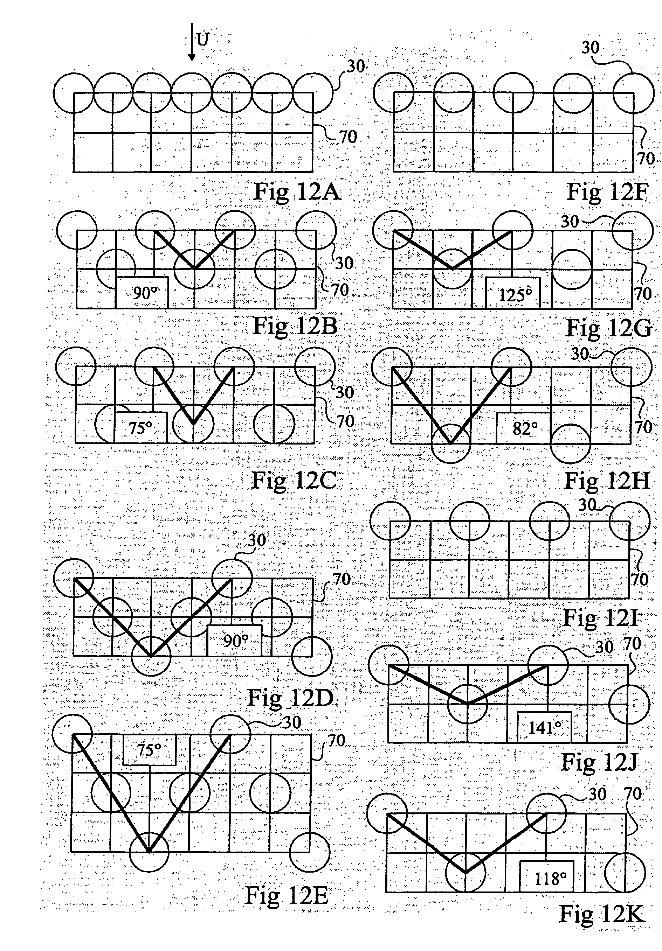

Les figures 12A à 12K représentent chacune une vue de dessus d'une barge 70 du type de celle représentée aux figures 11A ou 11C illustrant schématiquement un agencement possible de colonnes turbine 30 sur la barge 70 (l'encombrement de chaque colonne turbine étant indiqué par un cercle 30). Il est souhaitable de limiter, pour chaque barge, le nombre de rangées de colonnes turbine par exemple à deux ou trois rangées. La direction du courant atteignant les colonnes turbine 30 est identique pour chaque figure 12A à 12K et est indiquée par la flèche U. Sur les figures 12A à 12E, la projection selon la direction U de l'enveloppe des colonnes turbine 30 sur un plan perpendiculaire à U recouvre tout le plan. Un tel agencement de colonnes turbine est dit à obturation de 1. Sur les figures 12F à 12H, l'obturation obtenue est de 2/3 et, sur les figures 12I à 12K, l'obturation obtenue est de 1/2.

Lorsque le site marin ou fluvial traversé par un courant est de grandes dimensions, plusieurs barges 70 peuvent être assemblées pour former une flottille 76. Une répartition judicieuse des barges 70 de la flottille 76 permet d'optimiser l'énergie récupérée au niveau de chaque barge 70.

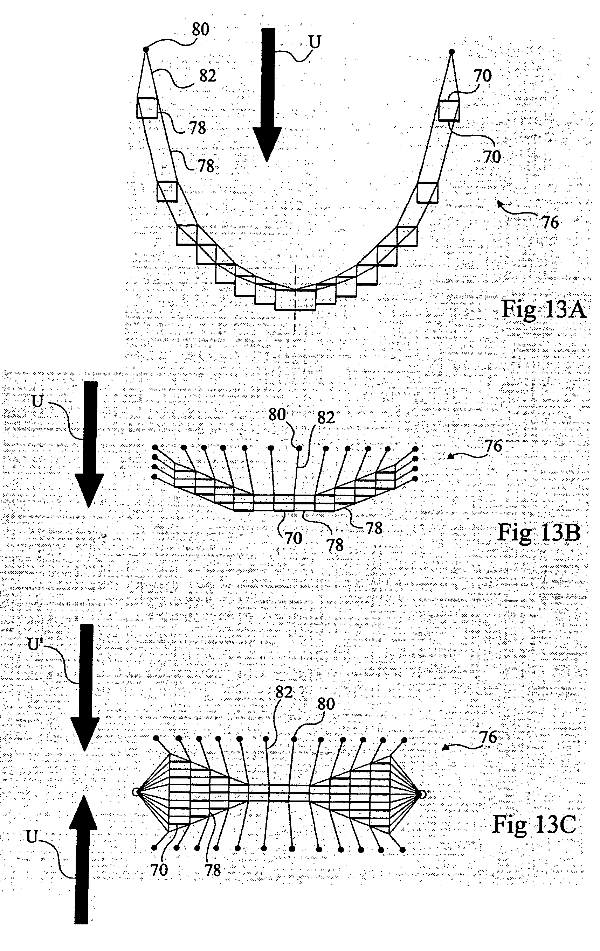

Les figures 13A à 13C représentent schématiquement des vues de dessus de trois exemples de réalisation de flottilles 76. Les barges 70 sont reliées les unes aux autres par des premiers câbles 78 et sont ancrées au fond du site marin ou fluvial au niveau de points d'ancrage 80 par des seconds câbles 82. La fixation ou le lestage de l'extrémité inférieure de chaque colonne turbine peut être réalisée selon l'un des exemples de fixation décrits précédemment en relation aux figures 8, 9A à 9C. Les barges 70 dans une flottille 76 peuvent être ancrées indépendamment les unes des autres au fond du site, notamment si elles sont peu nombreuses, ou rendues solidaires au moyen de câbles et ancrées au fond du site par l'intermédiaire de barges périphériques de la flottille 76. Ceci permet de réduire le coût de fixation de la flottille 76 en utilisant des ancres plus fortes mais moins nombreuses. L'utilisation de câbles permet de modifier aisément la configuration de la flottille 76 sur le site lui-même. L'utilisation d'un nombre d'ancrages réduit facilite le déplacement de la flottille 76, par exemple, dans le cas d'une modification du courant.

En figure 13A, les barges 70 sont assemblées en paires de barges, les paires étant réparties pour former une épuisette disposée transversalement au courant (indiqué par la flèche U). Les barges sont reliées au fond du site marin ou fluvial (où, si cela est possible, à des berges avoisinantes) par deux points d'ancrage aux extrémités de la forme en "épuisette". Un tel agencement permet d'optimiser le flux d'énergie cinétique intercepté par la flottille 76. On évite ainsi des phénomènes indésirables du type écrantage ou évitement du courant puisque le courant est piégé dans l'épuisette. En Figure 13B, les barges 70 sont également assemblées en forme "d'épuisette", les points d'ancrage 80 étant plus nombreux que dans l'exemple de réalisation précédent. En figure 13C, les barges 70 sont assemblées en forme de deux épuisettes disposées dos à dos. Un tel agencement est adapté à un courant de direction constante mais dont le sens peut s'inverser (indiqué par les flèches U et U' de sens contraire). Il s'agit par exemple du courant issu de la marée.

Bien entendu, la présente invention est susceptible de diverses variantes et modifications qui apparaîtront à l'homme de l'art. En particulier, une même colonne turbine peut comporter des modules turbine de nature différente, par exemple du type représenté aux figures 1A, 1B à 4A, 4B.

## Revendications

1. Turbomachine hydraulique (30) comportant un arbre d'entraînement (31) le long duquel sont réparties des turbines (10) destinées à entraîner l'arbre d'entraînement en rotation lorsqu'elles sont immergées dans un liquide en mouvement,
chaque turbine comprenant des pales motrices (14) réparties autour de l'arbre d'entraînement, chaque pale motrice ayant la forme d'une aile volante en "V" à extrémité libre et ayant une flèche supérieure à 10 degrés, la partie centrale de l'aile étant reliée à l'arbre d'entraînement par un bras (16),
pour chaque couple de première et seconde turbines adjacentes, la première turbine étant décalée angulairement autour de l'arbre d'entraînement par rapport à la seconde turbine, d'où il résulte que le couple d'entraînement fourni par l'arbre d'entraînement au cours de la rotation est uniformisé et que la mise en rotation de la turbomachine est facilitée.

2. Turbomachine selon la revendication 1, dans lequel chaque pale motrice (14) a un profil d'aile dont le squelette correspond à un arc d'un cercle (C1) dont le centre appartient à l'axe de l'arbre d'entraînement (31).

3. Turbomachine selon la revendication 1, comprenant des ailettes d'extrémité (22) au niveau des bords marginaux de chaque pale motrice (14) d'où il résulte que les pertes de performances hydrodynamiques dues aux effets de bord sont limitées.

4. Turbomachine selon la revendication 1, dans lequel le bras (16) s'étend selon une direction sensiblement perpendiculaire à l'axe de l'arbre d'entraînement (31) et a une section transverse en forme de profil d'aile.

5. Turbomachine selon la revendication 1, dans lequel chaque bras (16) est adapté à fournir une force orientée selon l'axe de l'arbre d'entraînement (31) lorsqu'il est immergé dans le liquide en mouvement.

6. Dispositif comprenant plusieurs turbomachines (30) selon l'une des revendications 1 à 5, et comprenant une barge (70) comportant, pour chaque turbomachine, une ouverture (72) dans laquelle une portion d'extrémité (66) de l'arbre d'entraînement (31) de la turbomachine, s'étendant hors du liquide en mouvement, est montée libre en rotation et en coulissement axial.

7. Dispositif selon la revendication 6, dans lequel les extrémités des arbres d'entraînement (12) des turbomachines (30) opposées aux portions d'extrémités (66) sont lestées ou destinées à être reliées à une surface fixe par rapport au liquide en mouvement.

8. Système (76) comprenant un ensemble de dispositifs selon les revendications 6 ou 7, dans lequel au moins certains des dispositifs sont reliés entre eux par des premiers câbles (78) et dans lequel au moins certains des dispositifs sont destinés à être reliés par des seconds câbles (82) à une surface fixe par rapport au liquide en mouvement.

9. Système selon la revendication 8, dans lequel certains des dispositifs de l'ensemble de dispositifs sont répartis le long d'une surface plane en gouttière destinée à être disposée transversalement à la direction du liquide en mouvement.

## Claims

1. A hydraulic turbine engine (30) comprising a drive shaft (31) along which are distributed turbines (10) intended to rotate the drive shaft when they are immersed in a moving liquid,
each turbine comprising drive blades (14) arranged around the drive shaft, each drive blade being shaped as a "V" wing with a free tip and having a deflecting greater than 10 degrees, the central portion of the wing being connected to the drive shaft by an arm (16),
for each pair of first and second adjacent turbines, the first turbine being angularly shifted around the drive shaft with respect to the second turbine, whereby the drive torque provided by the drive shaft during the rotation is made uniform and the rotating of the turbine engine is eased.

2. The turbine engine of claim 1, wherein each drive blade (14) has an aerofoil shape with a skeleton line corresponding to an arc of a circle (C1) having its center on the axis of the drive shaft (31).

3. The turbine engine of claim 1, comprising end winglets (22) at the tip edges of each drive blade (14) whereby hydrodynamic performance losses due to wind tip effects are limited.

4. The turbine engine of claim 1, wherein the arm (16) extends along a direction substantially perpendicular to the axis of the drive shaft (31) and has an aerofoil section.

5. The turbine engine of claim 1, wherein each arm (16) is capable of providing a force directed along the axis of the drive shaft (31) when it is immersed in the moving liquid.

6. A device comprising several turbine engines (30) of any of claims 1 to 5, and comprising a barge (70) comprising, for each turbine engine, an opening (72) in which an end portion (66) of the drive shaft (31) of the turbine engine, extending out of the moving liquid, is assembled to freely rotate and slide along the axis.

7. The device of claim 6, wherein the ends of the drive shafts (12) of the turbine engines (30) opposite to the end portions (66) are ballasted or intended to be connected to a surface which is fixed with respect to the moving liquid.

8. A system (76) comprising an assembly of devices of claims 6 or 7, wherein at least some of the devices are interconnected by first cables (78) and wherein at least some of the devices are intended to be connected by second cables (82) to a surface which is fixed with respect to the moving liquid.

9. The system of claim 8, wherein some of the devices of the assembly of devices are distributed along a planar gutter-shaped surface intended to be arranged transversely to the direction of the moving liquid.

## Patentansprüche

1. Ein hydraulischer Turbinenmotor (30), wobei der hydraulische Turbinenmotor eine Antriebswelle (31) aufweist, entlang derer Turbinen (10) verteilt sind, die dafür vorgesehen sind die Antriebswelle zu drehen, wenn diese in eine bewegende Flüssigkeit eingetaucht sind,
wobei jede Turbine Antriebsschaufeln (14) aufweist, die um die Antriebswelle angeordnet sind, wobei jede Antriebsschaufel als ein "V" Flügel mit einer freien Spitze ausgebildet ist und eine Auslenkung größer als 10° aufweist, wobei der Mittelteil des Flügels mit der Antriebswelle über einen Arm (16) verbunden ist, und wobei für jedes Paar von ersten und zweiten benachbarten Turbinen, die erste Turbine, bezüglich der zweiten Turbine, um einen Winkel um die Antriebswelle versetzt ist, wobei das Antriebsdrehmoment, das durch die Antriebswelle während der Drehung bereitgestellt wird gleichförmig gemacht ist und die Drehung des Turbinenmotors ruhig ist.

2. Der Turbinenmotor nach Anspruch 1, wobei jede Antriebsschaufel (14) eine Tragflächenform mit einer Skelettlinie, die einem Kreisbogen (C1) entspricht, aufweist, wobei er seine Mitte auf der Achse der Antriebswelle (31) hat.

3. Der Turbinenmotor nach Anspruch 1, wobei dieser End-Winglets (22) an den Kanten der Spitze jeder Antriebsschaufel (14) aufweist, wobei hydrodynamische Leistungsverluste durch Windspitzeneffekte begrenzt sind.

4. Der Turbinenmotor nach Anspruch 1, wobei der Arm (16) sich entlang einer Richtung, die im Wesentlichen senkrecht zu der Achse der Antriebswelle (31) ist, erstreckt und einen Tragflächenbereich aufweist.

5. Der Turbinenmotor nach Anspruch 1, wobei jeder Arm (16) geeignet ist eine Kraft bereitzustellen, die entlang der Achse der Antriebswelle (31) gerichtet ist, wenn dieser in die bewegende Flüssigkeit eingetaucht ist.

6. Eine Vorrichtung, die mehrere Turbinenmotoren (30) nach einem der Ansprüche 1 bis 5 aufweist, und die ferner eine Barge beziehungsweise einen Schiffkörper (70) aufweist, der für jeden Turbinenmotor, eine Öffnung (72) aufweist, in der ein Endteil (66) der Antriebswelle (31) des Turbinenmotors, der aus der bewegenden Flüssigkeit herausragt, so angeordnet ist, dass er sich frei drehen kann und entlang der Achse gleiten kann.

7. Die Vorrichtung nach Anspruch 6, wobei die Enden der Antriebswelle (12) des Turbinenmotors (30), die den Endteilen (66) gegenüber liegen, belastet sind oder dafür vorgesehen sind mit einer Oberfläche, die bezüglich der bewegenden Flüssigkeit fest ist, verbunden zu werden.

8. Ein System (76), wobei das System eine Anordnung von Vorrichtungen nach Anspruch 6 oder 7 aufweist, wobei wenigstens einige der Vorrichtungen untereinander über erste Kabel (78) verbunden sind und wobei wenigstens einige der Vorrichtungen vorgesehen sind, um über zweite Kabel (82) mit einer Oberfläche, die bezüglich der bewegenden Flüssigkeit fest ist, verbunden zu werden.

9. Das System nach Anspruch 8, wobei einige der Vorrichtungen der Anordnung von Vorrichtungen entlang einer ebenen rinnenförmigen Oberfläche verteilt sind und vorgesehen sind quer zu der Richtung der bewegenden Flüssigkeit angeordnet zu sein.
